# FASCICULE DE BREVET EUROPEEN

(11) **EP 0 343 089 B1**
(45) Date de publication et mention de la délivrance du brevet: **12.01.1994**
(21) Numéro de dépôt: 89420172.2
(22) Date de dépôt: 19.05.1989
(51) Int. Cl.: H04M 11/00

(54) **Circuit d'interface téléphonique**
Fernsprechschnittstellenschaltung
Telephone interface circuit

(30) Priorité: 20.05.1988 FR 8807133
(43) Date de publication de la demande: 23.11.1989
(73) Titulaire: DOLPHIN INTEGRATION, F-38240 Meylan (FR)
(72) Inventeur: Dupillier, Christian, F-38190 Brignoud (FR)
(74) Mandataire: de Beaumont, Michel

(56) Documents cités:
- WO-A-86/07222
- GB-A- 2 097 223
- US-A- 4 459 435

## Description

La présente invention concerne un circuit d'interface téléphonique ayant une fonction de répondeur et d'aiguillage vers divers terminaux, l'un au moins de ces terminaux étant un poste téléphonique.

Plus particulièrement, la présente invention vise un tel circuit d'interface téléphonique qui fonctionne sans aucune source d'alimentation (secteur ou pile), mais reçoit toute l'énergie électrique dont il a besoin par la ligne téléphonique et dans les limites autorisées par les réseaux téléphoniques.

On connaît des systèmes d'interface téléphoniques, dans lesquels il est prévu un appareil du type répondeur, permettant de prendre la ligne, ce qui équivaut à décrocher un combiné téléphonique ; ensuite, un décodeur multifréquences permet de reconnaître un signal de numérotation supplémentaire réémis sur la ligne et d'aiguiller en conséquence la ligne téléphonique vers un terminal souhaité.

Généralement, ces systèmes qui permettent par exemple des couplages à des appareils télécommandés, à des mémoires associées à des compteurs ou à des microprocesseurs pouvant communiquer avec une ligne téléphonique, fonctionnent indépendamment des postes téléphoniques sur des lignes spécifiquenent allouées , comme cela est par exemple décrit dans le document GB-A-2.097.223.

Dans certains cas, on souhaite cependant pouvoir réaliser ou bien un aiguillage vers un terminal particulier ou bien un aiguillage vers un poste téléphonique.

Dans ce cas, un problème qui se pose est que les postes téléphoniques de type courant comprennent une sonnerie interne qui est réglée pour fonctionner en réponse au signal de sonnerie émis par la ligne téléphonique. La ligne téléphonique ayant été prise automatiquement, si l'on veut actionner ensuite la sonnerie d' un poste, une fois que la ligne a été prise, il faut régénérer de façon interne au circuit d' interface un signal de sonnerie propre à fair fonctionner la sonnerie du poste téléphonique, c' est-à-dire dans les normes courantes, un signal à +/-48 volts. Ceci oblige à coupler le circuit d'interface à une alimentation électrique, par exemple le secteur, une pile, ou un accumulateur.

Or, on souhaite selon la présente invention prévoir un appareil ne comprenant aucune source d'alimentation pour que, par exemple, en l'absence d'un abonné téléphonique alors que celui-ci a coupé le compteur électrique de son domicile, l'on puisse faire à distance des relevés de compteurs, par exemple du compteur électrique, du compteur de gaz, du compteur d'eau, etc.

Pour atteindre cet objet, la présente invention prévoit un circuit d'interface téléphonique, non connecté à une source d' alimentation, disposé sur une ligne téléphonique reliée à au moins un conjoncteur connectable à un poste téléphonique, ce circuit étant connecté à divers terminaux, et comprenant des premiers moyens de détection de signal de sonnerie, des seconds moyens de prise de ligne pour prendre la ligne dès que le signal de sonnerie a été détecté pendant une durée déterminée, des troisième moyens de temporisation, de sélection et d'aiguillage ; chaque conjoncteur est relié directement à la ligne, connecté pour inhiber la sonnerie du poste téléphonique correspondant, et associé à un transducteur sonore relié auxdits troisièmes moyens et actionnable par un signal sous faible tension.

Ainsi, selon un aspect principal de l'invention, on arrive à supprimer toute alimentation électrique dans l'appareil, grâce au fait que les inventeurs ont réalisé que l'on pouvait simplement inhiber la sonnerie d' un poste téléphonique classique par action sur le mode de câblage de son conjoncteur et prévoir des sonneries indépendantes (transducteurs sonores d' appel) fonctionnant en basse tension et en basse puissance, actuellement commercialement disponibles, alors que, selon un préjugé de l'art antérieur, on s'efforçait de faire fonctionner la sonnerie interne d'un poste téléphonique sans réaliser qu' il était en fait plus coûteux et plus complexe de régénérer un signal de sonnerie que de prévoir un transducteur sonore d'appel supplémentaire fonctionnant sans source d'alimentation externe.

Ces objets, caractéristiques et avantages ainsi que d' autres de la présente invention seront exposés plus en détail dans la description suivante de la présente invention faite en relation avec les figures jointes parmi lesquelles :
la figure 1 est un schéma sous forme de blocs de l'organisation générale d'un circuit d'interface selon la présente invention ;
la figure 2 est un schéma sous forme de blocs d'une partie du circuit de la figure 1 ;
la figure 3 représente le câblage classique d'un conjoncteur mâle de poste téléphonique ;
les figures 4 et 5 représentent le câblage d'un conjoncteur femelle, classique et selon la présente invention, respectivement ;
les figures 6 et 7 représentent le câblage de conjoncteurs femelles en parallèle, classiques et selon la présente invention, respectivement.

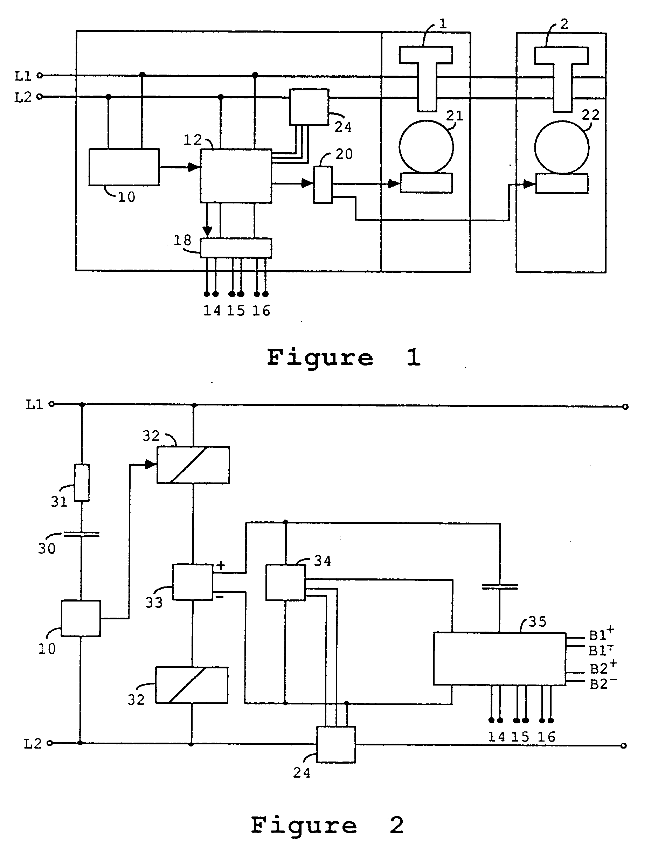

Ainsi, la figure 1 représente l'organisation d'ensemble d'un circuit d'interface téléphonique selon la présente invention. Ce circuit est connecté aux fils L1 et L2 d'une ligne téléphonique qui est également connectée à des conjoncteurs femelles 1 et 2. Deux conjoncteurs femelles ont été représentés dans la figure 1 mais, on comprendra que ce nombre peut être supérieur ou inférieur.

En parallèle sur la ligne téléphonique est connecté un bloc 10 de prise de ligne, tel qu'existant classiquement dans un répondeur, destiné à actionner un relais de prise de ligne un certain temps après qu'un signal de sonnerie est apparu sur la ligne L1, L2. La valeur minimale de ce temps de retard est généralement fixée par des normes du réseau téléphonique.

Le circuit de détection de signal de sonnerie 10 actionne alors un circuit 12 de détection, de sélection et d'aiguillage. Ce circuit 12 permet de coupler la ligne téléphonique à des terminaux reliés à des bornes 14, 15, 16... par l'intermédiaire d'un éventuel circuit d'interface 18. D'autre part, le circuit 12 peut actionner un générateur basse fréquence 20 qui envoit des signaux susceptibles d'être transformés en signaux sonores par des transducteurs sonores d'appel 21 et 22 respectivement disposés au voisinage des conjoncteurs 1 et 2. On notera qu'il existe dans le commerce des transducteurs sonores actionnables sous faible tension et à faible puissance, par exemple le transducteur électromécanique QMB-111 de la Société STAR ou le transducteur "buzzer" piézo-céramique EB 20E-35C de la Société FUJI.

Selon un mode de réalisation particulier, les circuits électroniques 10 à 20, le conjoncteur 1 et le transducteur sonore 21 sont disposés dans un même boîtier. Par contre, le conjoncteur 2 et le transducteur sonore 22 sont disposés tous deux dans un autre boîtier qui sera généralement installé de façon éloignée du premier, par exemple dans une pièce distincte d'une habitation ou d'un immeuble de bureau.

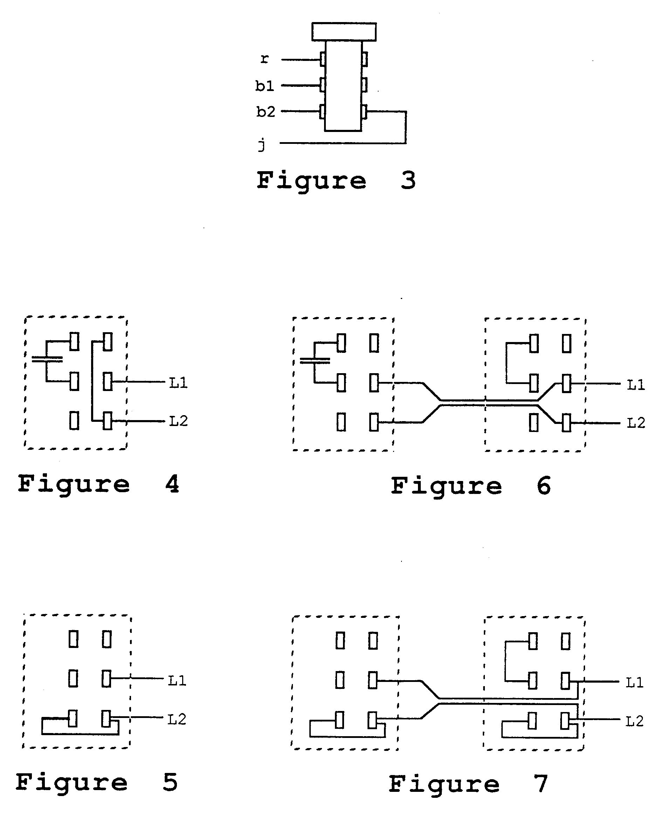

Comme cela sera illustré plus en détail ci-après en relation avec les figures 5 et 7, les conjoncteurs femelles 1 et 2 sont connectés de façon à ne pas provoquer la mise en route des sonneries disposées dans les postes reliés à ces conjoncteurs.

En outre, un circuit de détection de décroché 24 est disposé en série sur le conducteur L2 de la ligne. Ce circuit détecte le passage de courant et fournit des signaux de commande appropriés au circuit 12, par exemple pour interrompre la sonnerie des transducteurs sonores après décrochement.

Le circuit selon l'invention tel illustré en figure 1 fonctionne de la façon suivante. Etant donné un appel incident sur la ligne L1, L2, celui-ci est rapidement détecté par le circuit 10 et le circuit 12 entre en action.

Si l'appelant ne fait aucune nouvelle action pendant une durée déterminée, le circuit 12 provoque automatiquement l'actionnement du circuit 20, pour actionner par exemple le transducteur sonore 21 et/ou le transducteur sonore 22. Ainsi, le poste téléphonique relié au conjoncteur concerné fonctionne normalement, avec la seule différence pour l'appelant qu'il lui faudra attendre un temps plus long avant le décrochement puisque les premiers signaux de sonneries émis sur la ligne n'entraînent aucun signal audible pour l'appelé.

Par contre, si, à l'intérieur de la durée déterminée susmentionnée, l'appelant forme sur la ligne, avec un poste de type électronique à émission multifréquences, un numéro d'appel supplémentaire, celui-ci entraînera que le circuit 12 oriente la communication vers l'une des paires de bornes 14, 15, 16... ou bien envoie un signal à l'un et/ou l'autre des transducteurs sonores 21 ou 22. Ceci permet par exemple de choisir l'appel d'un poste déterminé à l'intérieur d'une habitation à l'exception de tous les autres. Il existe ainsi en quelque sorte une fonction de mini-standard téléphonique. Ceci permet également d'actionner sélectivement le terminal ou la mémoire associée à un compteur connecté à l'une des bornes 14, 15, 16...

La figure 2 représente de façon un peu plus détaillée une partie du circuit de la figure 1. Le circuit de détection d'appel 10 est disposé entre les lignes L1 et L2, en série avec un condensateur 30 et une résistance 31. Il pourra par exemple s'agir d'un circuit intégré tel que le circuit TCM 1520A disponible auprès de la société dite Texas Instruments. Le détecteur de signal de sonnerie 10 déclenche une paire de relais 32 disposés en série avec un redresseur double alternance 33 entre les lignes L1 et L2. Ce redresseur 33 fournit, à partir de la tension de ligne, toute l'énergie nécessaire au fonctionnement de l'appareil selon la présente invention. Plus particulièrement, cet appareil peut comprendre un circuit d'interface de ligne 34 disponible par exemple auprès de la société dite Motorola sous la référence TCA3383 et un décodeur multifréquences 35 disponible par exemple auprès de la société dite SSI sous la référence SSI 20C89.

On retrouve à la sortie du circuit 35 les lignes 14, 15, 16..., illustrées à la sortie du circuit 18 de la figure 1 et des lignes B1⁺, B1⁻ et B2⁺, B2⁻ correspondant aux conducteurs disposés entre le circuit 20 et les haut-parleurs 21 et 22 de la figure 1.

Selon un aspect important de la présente invention, on utilise des postes téléphoniques classiques sans aucune modification de branchement. Notamment dans le cadre des normes des réseaux de télécommunications français, les postes téléphoniques sont connectés par un conjoncteur mâle tel que représenté en figure 3. Ce conjoncteur mâle comprend 6 bornes représentées par des rectangles verticaux. Quatre d'entre elles sont câblées. Classiquement, le fil marqué r est de couleur rouge et correspond à un fil de sonnerie, le fil marqué b1 est de couleur blanche et correspond à un premier fil de ligne, le fil marqué b2 est de couleur bleu et correspond à un deuxième fil de ligne et le fil marqué j est de couleur jaune et correspond à un deuxième fil de sonnerie. Les liaisons de ces fils r, b1, b2 et j à l'intérieur du poste téléphonique apparaissent dans les manuels d'utilisation.

Normalement, ce conjoncteur mâle est destiné à venir dans un conjoncteur femelle classique comprenant également 6 bornes représentées par des rectangles verticaux et dont le câblage est illustré en figure 4 dans laquelle les références L1 et L2 désignent les fils connectés aux conducteurs de ligne.

La figure 6 représente la façon dont on associe classiquement en parallèle deux conjoncteurs classiques de sorte que les deux postes qui y sont reliés fonctionnent simultanément. On notera que les fils de ligne allant d'un conjoncteur à l'autre sont éventuellement croisés.

Selon la présente invention, on n'effectue aucune modification au conjoncteur mâle mais les conjoncteurs femelles voient leurs connexions internes modifiées de la façon illustrée en figure 5 dans le cas d'un conjoncteur unique et en figure 7 dans le cas de deux conjoncteurs en parallèle. La liaison entre les deux bornes inférieures du conjoncteur femelle assure l'inhibition des signaux de sonnerie.

Ainsi dans le cas de figure 1, les deux conjoncteurs femelles 1 et 2 seront câblés de la façon illustrée en figure 7. Bien que connectés en parallèle, les deux postes sont munis de dispositifs d'appel indépendants (les transducteurs sonores 21 et 22).

Dans ce qui précède on s'est référé à titre d'exemple à des caractéristiques et des modes de câblage spécifiques au réseau téléphonique français mais il est clair que la présente invention sous son aspect général pourra s'appliquer à d'autres normes.

Bien entendu, la présente invention a été présentée de façon schématique et divers circuits auxiliaires pourront ou devront être associés à l'appareil décrit, par exemple le détecteur de décrochement pourra permettre d'émettre un appel téléphonique à partir d'un poste relié au conjoncteur 1 ou 2 sans que cet appel soit perturbé par les circuits répondeurs.

## Revendications

1. Circuit d'interface téléphonique, non connecté à une source d'alimentation, disposé sur une ligne téléphonique (L1, L2) reliée à au moins un conjoncteur (1, 2) connectable à un poste téléphonique, ce circuit étant connecté à divers terminaux, et comprenant des premiers moyens (10) de détection de signal de sonnerie, des seconds moyens (32) de prise de ligne pour prendre la ligne dès que le signal de sonnerie a été détecté pendant une durée déterminée, et des troisièmes moyens (12) de temporisation, de sélection et d'aiguillage, caractérisé en ce que chaque conjoncteur est :
relié directement à la ligne,
connecté pour inhiber la sonnerie du poste téléphonique correspondant, et
associé à un transducteur sonore (21, 22) relié auxdits troisièmes moyens et actionnable par un signal sous faible tension.

2. Circuit d'interface téléphonique selon la revendication 1, caractérisé en ce que les troisièmes moyens établissent une connexion vers au moins un transducteur sonore quand une deuxième durée déterminée après la prise de ligne s'est écoulée.

3. Circuit selon la revendication 1, caractérisé en ce que les troisièmes moyens établissent une connexion vers au moins un transducteur sonore quand un numéro d'appel supplémentaire a été émis sur la ligne et a été détecté par lesdits troisièmes moyens.

4. Circuit d'interface téléphonique selon la revendication 1, caractérisé en ce que chaque transducteur sonore est monté dans le même boîtier que chaque conjoncteur.

## Claims

1. A telephone interface circuit, not connected to a supply source, arranged on a telephone line (L1, L2) connected to at least one plug (1, 2) connectable with a telephone set jack, said circuit being connected to various terminals and comprising first means (10) for detecting the ring signal, second means (32) for establishing connection with a telephone line as soon as the ring signal has been detected for a determined time duration, and third timing, selecting and steering means (12), characterized in that each plug is:
directly connected to the line,
connected for inhibiting the ringing of the corresponding telephone set, and
associated with a sound transducer (21, 22) connected with said third means and operable by a low voltage signal.

2. A telephone interface circuit according to claim 1, characterized in that said third means establish a connection towards at least one sound transducer when a second determined time duration has occurred after the connection to the line.

3. A telephone interface circuit according to claim 1, characterized in that said third means establish a connection towards at least one sound transducer when an additional call number has been emitted on the line and has been detected by said third means.

4. A telephone interface circuit according to claim 1, characterized in that each sound transducer is arranged in the same case as each plug.

## Patentansprüche

1. Fernsprechschnittstellenschaltung, die nicht mit einer Versorgungsquelle verbunden und in einer Telefonleitung (L1, L2) gelegen ist, welche mit mindestens einem Stecker (1, 2) verbunden ist, der mit einem Telefonapparat zu verbinden ist, wobei diese Schaltung mit verschiedenen Endstellen verbunden ist und erste Einrichtungen (10) zum Erfassen des Klingelsignales, zweite Einrichtungen (32) zum Einrichten einer Verbindung auf der Leitung, sobald das Klingelsignal für eine bestimmte Zeitdauer erfaßt wurde und dritte Zeit-, Wahl- und Steuereinrichtungen (12) aufweist, dadurch gekennzeichnet, daß jeder Stecker
direkt mit der Leitung verbunden ist,
zum Abstellen des Klingelsignals des entsprechenden Telefonapparates verbunden ist und
einem Tonsignalerzeuger (21, 22) zugeordnet ist, der an die dritten Einrichtungen angeschlossen und durch ein Signal mit niedriger Spannung einschaltbar ist.

2. Fernsprechschnittstellenschaltung nach Anspruch 1, dadurch gekennzeichnet, daß die dritten Einrichtungen eine Verbindung zu mindestens einem Tonsignalerzeuger einrichten, wenn eine zweite bestimmte Zeitdauer nach dem Einrichten einer Verbindung abgelaufen ist.

3. Schaltung nach Anspruch 1, dadurch gekennzeichnet, daß die dritten Einrichtungen eine Verbindung zu mindestens einem Tonsignalerzeuger einrichten, wenn eine zusätzliche Rufnummer auf die Leitung gesendet und durch die dritten Einrichtungen erfaßt worden ist.

4. Fernsprechschnittstellenschaltung nach Anspruch 1, dadurch gekennzeichnet, daß jeder Tonsignalerzeuger in dem gleichen Gehäuse wie der zugeordnete Stecker eingebaut ist.
